# EUROPEAN PATENT APPLICATION

(11) **EP 2 151 926 A2**
(43) Date of publication of application: **10.02.2010**
(21) Application number: 08254087.3
(22) Date of filing: 19.12.2008
(51) Int. Cl.: H04B 1/38

(54) **Wireless USB type transmitter, wireless USB type receiver and wireless USB type transceiver**

(30) Priority: 05.08.2008 KR 20080076467
(71) Applicant: Samsung Electro-Mechanics Co., Ltd., Yeongtong-gu Suwon-si, Gyenonggi-do (KR)
(72) Inventor: Jeong, Chan Yong, Seoul (KR)
(74) Representative: Powell, Timothy John

(57) **Abstract**

A wireless Universal Serial Bus (USB) type transmitter includes a signal processing unit restoring data of a received signal, an interface unit converting data from the signal processing unit into data of a preset interface manner, and a signal converting unit converting data converted by the interface unit into a wireless USB type data signal.

## Description

### CROSS-REFERENCE TO RELATED APPLICATIONS

This application claims the priority of Korean Patent Application No. 2008-0076467 filed on August 05, 2008, in the Korean Intellectual Property Office, the disclosure of which is incorporated herein by reference.

### BACKGROUND OF THE INVENTION

### Field of the Invention

The present invention relates to a wireless transmitter and a wireless receiver, and more particularly, to a wireless transmitter and a wireless receiver, which can transmit and receive broadcasting data via an ultra wide band frequency range in a wireless Universal Serial Bus (USB) manner.

### Description of the Related Art

In general, digital broadcasting is to transmit a broadcasting signal, which was transmitted in an analog manner of the related art, in a digital manner in order to provide high video quality, high sound quality and various services to users. Examples of the digital broadcasting include Digital Video Broadcasting (DVB), Digital Audio Broadcasting (DAB) and Digital Multimedia Broadcasting.

In recent, mobile digital broadcasting is expanding quickly, and the various standards of the mobile digital broadcasting are proposed. It is expected that the most nations of Europe will adopt a Digital Video Broadcasting - Handheld (DVB-H) technology as the mobile digital broadcasting standard.

The DVB-H technology is a standard based on the DVB being the existing European digital broadcasting, and is the standard of the mobile digital broadcasting based on an MPEG-2 technology.

The DVB-H type broadcasting is to formally be provided from Europe, and the DVB-H broadcasting is transmitted to settop boxes, satellite receivers, integration media devices and the like so that it is displayed through a display device.

However, since a terminal receiving the DVB-H broadcasting and a display device displaying broadcasting data received through the terminal interconnect through electric cables, it is difficult to move a place and connect the terminal to the display device.

### SUMMARY OF THE INVENTION

An aspect of the present invention provides a wireless transmitter and a wireless receiver, which can transmit and receive broadcasting data via an ultra wide band frequency range in a wireless Universal Serial Bus (USB) manner.

According to an aspect of the present invention, there is provided a wireless USB type transmitter, including: a signal processing unit restoring data of a received signal; an interface unit converting data from the signal processing unit into data of a preset interface manner; and a signal converting unit converting data converted by the interface unit into a wireless USB type data signal.

The interface unit may convert the data into a Secure Digital Input Output (SDIO) type data.

The signal processing unit may include: a Radio Frequency (RF) processor receiving an RF signal, and converting the RF signal into a baseband signal; a baseband processor restoring the data from the baseband signal; a first filter filtering the received RF signal, and transferring the filtered signal to the RF processor.

The a signal converting unit may include: a data processor converting the data from the interface unit into a wireless USB standard data packet; an RF converter converting the wireless USB standard data packet from the data processor into an Ultra Wide Band (UWB) RF signal; and a second filter filtering the UWB RF signal from the RF converter, and transmitting the filtered signal.

According to another aspect of the present invention, there is provided a wireless USB type receiver, including: a signal converting unit restoring data from a received wireless USB standard data packet and converting the restored data into data signals of a plurality of preset interface formats; and an application unit processing the respective data signals of the preset interface formats converted by the signal converting unit.

The wireless USB standard data packet may be included in a UWB RF signal is received, and the signal converting unit may include: an RF processor down converting the UWB RF signal into a baseband signal; a data processor extracting the data from the baseband signal; a multiple format converter converting the data extracted by the data processor into data of the interface formats; and a filter filtering the wireless USB standard data packet and transferring the filtered packet to the RF processor.

The multiple format converter may include: a timing converter differently delaying respective periods of the data extracted by the data processor according to the preset interface formats, and converting the delayed data into a plurality of data signals having different periods; a bit converter allowing the respective data signals from the timing converter to have different bits; a voltage level converter allowing the respective data signals from the bit converter to have different voltage levels; and an interface transferring the data signals from the voltage level converter in respective corresponding interface manners.

The interface may include first to third interfaces transferring respective corresponding type data signals among the data signals by different interface manners, the first interface may be a Secure Digital (SD) interface transferring the data signal converted in an SD manner among the data signals, the second interface may be a Peripheral Component Interconnect express (PCIe) interface transferring the data signal converted in a PCIe manner among the data signals, and the third interface may be a USB interface transferring the data signal converted in a USB manner among the data signals.

The application unit may include first to third application mediums having different electric characteristics, the first to the third application mediums receiving the data from the first to third interfaces and displaying the received data, the first application medium may be a mobile phone receiving the data signal from the SD interface and displaying the received data signal, the second application medium may be a computer receiving the data signal from the PCIe interface and displaying the received data signal, the third application medium may be a home appliance receiving the data signal from the USB interface and displaying the received data signal, and the application unit may further include a storage medium storing data transmitted from at least one of the mobile phone, the computer and the home appliance.

According to another aspect of the present invention, there is provided a wireless USB type transceiver, including: a signal transmitting unit transmitting data in a wireless USB manner; and a signal receiving unit converting the data, which are included in a wireless USB type signal received from the signal transmitting unit, into data of a plurality of preset interface formats.

The signal transmitting unit may include: a signal processor restoring the data from a received signal; a first interface converting the data from the signal processor into data of a preset interface manner; and a first signal converter converting the data converted by the first interface into data signal of a wireless USB manner, and transmitting the converted data signal.

The first interface may convert the data into data of a Secure Digital Input Output (SDIO) manner.

The signal processor may include: a first filter filtering a received RF signal; a first RF processor converting the RF signal filtered by the first filter into a baseband signal; and a baseband processor restoring the data from the baseband signal.

The first signal converter may include: a first data processor converting the data from the first interface into a wireless USB standard data packet; a RF converter converting the wireless USB standard data packet from the first data processor into a UWB RF signal; and a second filter filtering the UWB RF signal from the RF converter, and transmitting the filtered signal.

The signal receiving unit may include: a second signal converter restoring the data from the wireless USB standard data packet, and converting the restored data into data signals of a plurality of preset interface formats; and an application unit processing the data signals of the preset interface formats converted by the second signal converter.

The second signal converter may include: a third filter filtering the UWB RF signal; a second RF processor down converting the filtered UWB RF signal into a baseband signal; a second data processor extracting the data from the baseband signal; and a multiple format converter converting the data extracted by the second data processor into data of a plurality of preset interface formats.

The multiple format converter may include: a timing converter differently delaying respective periods of the data extracted by the second data processor according to the preset interface formats, and converting the data into a plurality of data signals having different periods; a bit converter allowing the respective data signals from the timing converter to have different bits; a voltage level converter allowing a plurality of data signals from the bit converter to have different voltage levels; and a second interface transferring the data signals from the voltage level converter in respective corresponding interface manners.

The second interface may include first to third interfaces transferring respective corresponding type data signals among the data signals by different interface manners, the first interface may be a SD interface transferring the data signal converted in an SD manner among the data signals, the second interface may be a PCIe interface transferring the data signal converted in a PCIe manner among the data signals, and the third interface may be a USB interface transferring the data signal converted in a USB manner among the data signals.

The application unit may include first to third application mediums having different electric characteristics, first to third application mediums receiving the data from at least one of the first to third interfaces and displaying the received data, and the application unit may include, the first application may be a mobile phone receiving the data signal from the SD interface and displaying the received data signal, the second application may be a computer receiving the data signal from the PCIe interface and displaying the received data signal, the third application may be a home appliance receiving the data signal from the USB interface and displaying the received data signal, and the application unit further may include a storage medium storing data transmitted from at least one of the mobile phone, the computer and the home appliance.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a block diagram of a wireless Universal Serial Bus (USB) type transmitter according to an embodiment of the present invention;
FIG. 2 is an operation timing diagram of an SDIO interface used in the transmitter according to an embodiment of the present invention;
FIG. 3 is a block diagram of a wireless USB type receiver according to another embodiment of the present invention; and
FIG. 4 is a block diagram of a multiple format converter of the receiver according to another embodiment of the present invention.

### DETAILED DESCRIPTION OF THE PREFERRED EMBODIMENT

Exemplary embodiments of the present invention will now be described in detail with reference to the accompanying drawings.

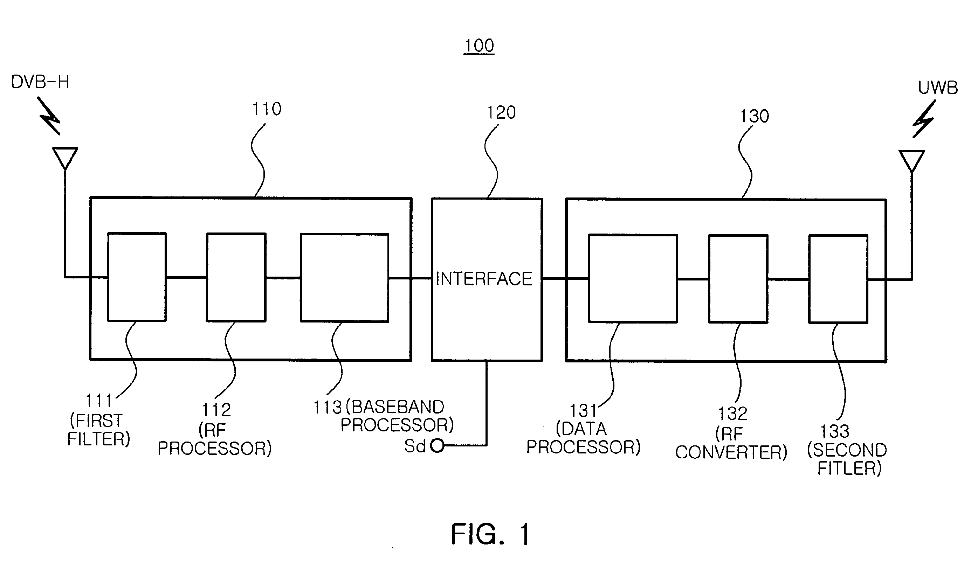

FIG. 1 is a block diagram of a wireless Universal Serial Bus (USB) type transmitter according to an embodiment of the present invention.

Referring to FIG. 1, the wireless USB type transmitter 100 according to an embodiment of the present invention includes a signal processing unit 110, an interface unit 120, and a signal converting unit 130.

The signal processing unit 110 receives a signal and extracts data of the received signal. The interface unit 120 converts the extracted data into data of a preset interface manner. The signal converting unit 130 converts the converted data into data of a preset format and transmits the converted data.

Specifically, the signal processing unit 110 may include a first filter 111, a Radio Frequency (RF) processor 112, and a baseband processor 113.

A signal received to the first filter 111 may be a wireless signal, and in particular may be a broadcasting signal. More particularly, the signal received to the first filter 111 may be a Digital Video Broadcasting - Handheld (DVB-H) broadcasting signal. The first filter 111 receives the DVB-H broadcasting signal, and filters the received DVB-H broadcasting signal in order for the signal to have a preset frequency range. Accordingly, the first filter 111 may be configured with a band-limited filter or a band-pass filter.

The RF processor 112 down converts the DVB-H signal filtered by the first filter 111 into a baseband signal according to a preset reference signal. The baseband processor 113 processes the baseband signal to thereby restore data included in the DVB-H signal.

The interface unit 120 converts the restored data into data of a preset interface manner, for example, a Secure Digital Input Output (SDIO) manner.

The data which are converted in the SDIO manner by the interface unit 120 are transferred to the signal converting unit 130. A data processor 131 of the signal converting unit 130 converts the converted data into a wireless USB standard data packet having a wireless USB header. An RF converter 132 converts the wireless USB standard data packet into an Ultra Wide Band (UWB) frequency signal, and transmits the converted UWB frequency signal through a second filter 133.

The wireless USB is a wireless type of a USB, and a wireless USB signal is transmitted as a UWB frequency signal. The UWB frequency signal is transmitted at a transfer rate of 480 Mpbs within a distance 2m and at a transfer rate of 110 Mbps within a distance 10m like the wired USB 2.0. Moreover, Wireless Fidelity (WiFi) uses a relative narrow frequency range of 2.4 GHz, whereas a frequency range used in the UWB is very broad as 3.1 GHz to 10.6 GHz. Since a UWB signal has weak signal strength, it does not interfere in other type wireless communication.

The interface unit 120 converts the data in the SDIO manner. The SDIO manner has a transfer rate of maximum 200 Mbps, and has a transfer rate higher than a transfer rate of the wireless USB within a distance 10m. In terms of power consumption, since the wireless USB uses a standard voltage of +5V whereas the SDIO manner uses a standard voltage of +3.3V or +1.8V, the SDIO manner consumes a relative lower power than the wireless USB.

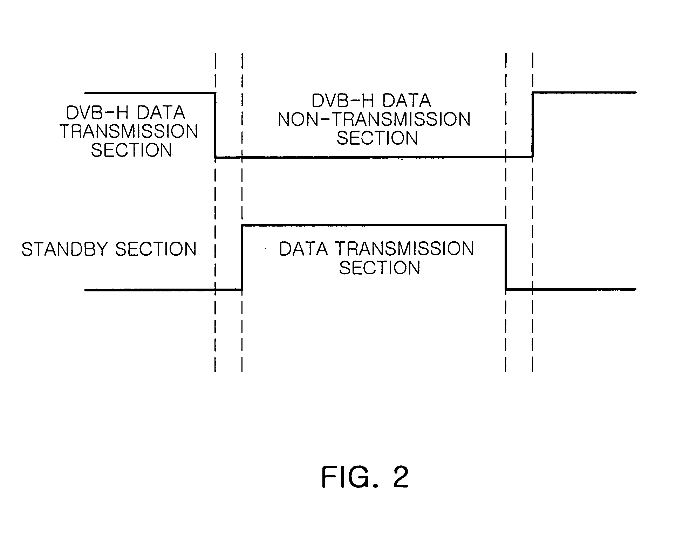

In addition, the interface unit 120 may exclusively be used for only the signal processing unit 110. As shown in FIG. 2, when separate data Sd are transmitted from other internal or external circuit, the interface unit 120 can be used according to needs in order for the transmitted data Sd not to overlap with the transmission of the DVB-H data.

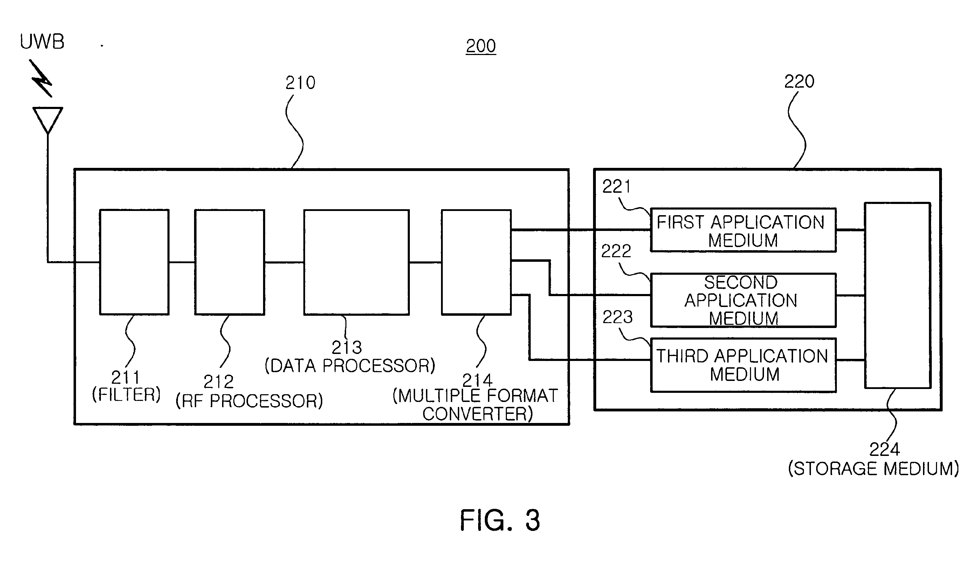

FIG. 3 is a block diagram of a wireless USB type receiver according to another embodiment of the present invention.

Referring to FIG. 3, the wireless USB type receiver 200 according to another embodiment of the present invention includes a signal converting unit 210 and an application unit 220.

The signal converting unit 210 restores data from a received signal and converts the restored data into data of a plurality of preset formats.

Therefore, the signal converting unit 210 includes a filter 211, an RF processor 212, a data processor 213, and multiple format converter 214.

The filter 211 filters a UWB RF signal in order for the signal to have a preset frequency range. The RF processor 212 converts the UWB RF signal filtered by the filter 211 into a baseband signal and thereafter restores data from the baseband signal. The UWB RF signal includes a wireless USB standard data packet, and a data processor 213 extracts original data from a restored wireless USB standard data packet. That is, when the broadcasting data included in the wireless USB standard data packet are transmitted as the UWB RF signal, the signal converting unit 210 receives the UWB RF signal, converts the received UWB RF signal into a baseband signal, restores the wireless USB standard data packet from the baseband signal, and extracts the broadcasting data from the wireless USB standard data packet.

The multiple format converter 214 converts the broadcasting data into data of a plurality of interface manners.

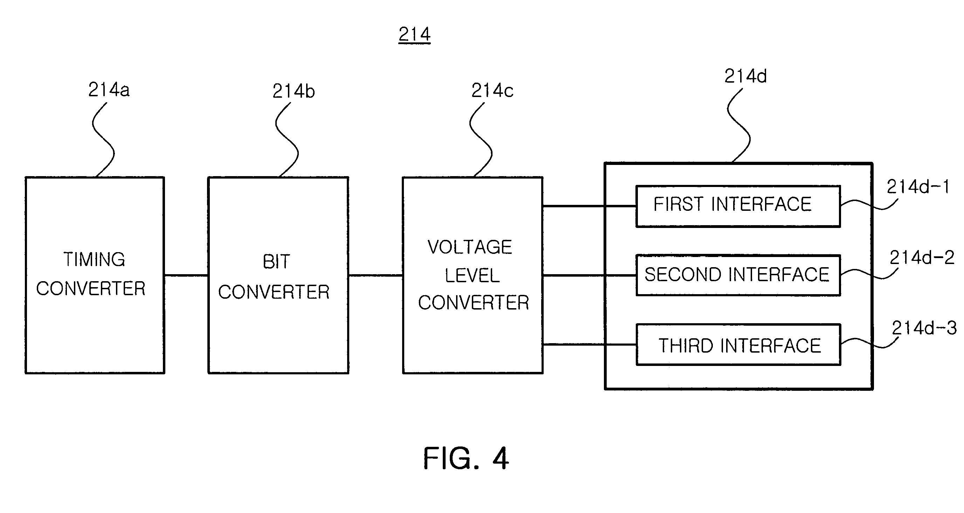

Accordingly, as illustrated in FIG. 4, the multiple format converter 214 includes a timing converter 214a, a bit converter 214b, a voltage level converter 214c, and an interface 214d.

The timing converter 214a delays a period of the extracted broadcasting data, and converts the data into a plurality of data signals having respective different periods. For example, in a case where the broadcasting data are to be transferred in a Secure Digital (SD) interface manner, a Peripheral Component Interconnect express (PCIe) interface manner and a USB interface manner, the broadcasting data are converted into a plurality of data signals having respective different periods.

The bit converter 214b allows the data signals from the timing converter 214a to have the different numbers of bits. That is, the bit converter 214b allows a data signal to be transferred in the SD interface manner to have 1 bit or 4 bits. The bit converter 214b allows a data signal to be transferred in the PCIe interface manner to have 32 bits or 64 bits. The bit converter 214b allows a data signal to be transferred in the USB interface manner to have 1 bit.

The voltage level converter 214c allows a plurality of data signals from the bit converter 214b to have different voltage levels. That is, the voltage level converter 214c allows the data signal to be transferred in the SD interface manner to have a voltage level of +3.3V or +1.8V. The voltage level converter 214c allows the data signal to be transferred in the PCIe interface manner to have a voltage level of +1.5V. The voltage level converter 214c allows the data signal to be transferred in the USB interface manner to have a voltage level of +5V.

The interface 214d has a plurality of interfaces. In FIG. 4, first to third interfaces 214d-1, 214d-2 and 214d-3 are included in the interface 214d, but the number of interfaces may variously be changed. The data signal from the voltage level converter 214c may be a SD type data signal, a PCIe type data signal and a USB type data signal. Accordingly, the respective first to third interfaces 214d-1, 214d-2 and 214d-3 of the interface 214d may be an SD interface, a PCIe interface and a USB interface in order to a corresponding type data signal.

The application unit 220 receives the broadcasting data from the respective first to third interfaces 214d-1, 214d-2 and 214d-3 of the interface 214d, and displays the received broadcasting data.

Accordingly, the application unit 220 may include first to third application mediums 221 to 223. The respective first to third application mediums 221 to 223 are connected to the first to third interfaces 214d-1, 214d-2 and 214d-3 to receive the broadcasting data.

That is, the respective first to third application mediums 221 to 223 may be a mobile phone, a computer and a home appliance. Therefore, the mobile phone receives the broadcasting data through the SD interface and displays the received broadcasting data. The computer receives the broadcasting data through the PCIe interface and displays the received broadcasting data. The home appliance receives the broadcasting data through the USB interface and displays the received broadcasting data.

The application unit 220 further includes a storage medium storing data transmitted from at least one of the mobile phone, the computer and the home appliance.

The wireless USB type transmitter 100 and the wireless USB type receiver 200 may be included in one wireless USB type transceiver. Since such a wireless USB type transceiver includes the same elements as those of the wireless USB type transmitter 100 and the wireless USB type receiver 200, the separate figure and description of the wireless USB type transceiver will be omitted.

In embodiments of the present invention, the terminal transmits a received broadcasting signal, in particular, the DVB-H signal in the wireless USB manner, and the display device displays and stores broadcasting data which are transmitted in the wireless USB manner, thereby requiring no wired connection between the terminal and the display device and enabling to easily move the terminal and the display device.

While the present invention has been shown and described in connection with the exemplary embodiments, it will be apparent to those skilled in the art that modifications and variations can be made without departing from the spirit and scope of the invention as defined by the appended claims.

## Claims

1. A wireless Universal Serial Bus (USB) type transmitter, comprising:
a signal processing unit restoring data of a received signal;
an interface unit converting data from the signal processing unit into data of a preset interface manner; and
a signal converting unit converting data converted by the interface unit into a wireless USB type data signal.

2. The wireless USB type transmitter of claim 1, wherein the interface unit converts the data into a Secure Digital Input Output (SDIO) type data.

3. The wireless USB type transmitter of claim 2, wherein the signal processing unit comprises:
a Radio Frequency (RF) processor receiving an RF signal, and converting the RF signal into a baseband signal;
a baseband processor restoring the data from the baseband signal; and
a first filter filtering the received RF signal, and transferring the filtered signal to the RF processor.

4. The wireless USB type transmitter of claim 2, wherein the a signal converting unit comprises:
a data processor converting the data from the interface unit into a wireless USB standard data packet;
an RF converter converting the wireless USB standard data packet from the data processor into an Ultra Wide Band (UWB) RF signal;
a second filter filtering the UWB RF signal from the RF converter, and transmitting the filtered signal.

5. A wireless Universal Serial Bus (USB) type receiver, comprising:
a signal converting unit restoring data from a received wireless USB standard data packet and converting the restored data into data signals of a plurality of preset interface formats; and
an application unit processing the respective data signals of the preset interface formats converted by the signal converting unit.

6. The wireless USB type receiver of claim 5, wherein the wireless USB standard data packet comprised in an Ultra Wide Band (UWB) Radio Frequency (RF) signal is received; and
the signal converting unit comprises:
an RF processor down converting the UWB RF signal into a baseband signal;
a data processor extracting the data from the baseband signal;
a multiple format converter converting the data extracted by the data processor into data of the interface formats; and
a filter filtering the wireless USB standard data packet, and transferring the filtered packet to the RF processor.

7. The wireless USB type receiver of claim 6, wherein the multiple format converter comprises:
a timing converter differently delaying respective periods of the data extracted by the data processor according to the preset interface formats, and converting the delayed data into a plurality of data signals having different periods;
a bit converter allowing the respective data signals from the timing converter to have different bits;
a voltage level converter allowing the respective data signals from the bit converter to have different voltage levels; and
an interface transferring the data signals from the voltage level converter in respective corresponding interface manners.

8. The wireless USB type receiver of claim 7, wherein the interface comprises first to third interfaces transferring respective corresponding type data signals among the data signals by different interface manners;
the first interface is a Secure Digital (SD) interface transferring the data signal converted in an SD manner among the data signals;
the second interface is a Peripheral Component Interconnect express (PCIe) interface transferring the data signal converted in a PCIe manner among the data signals; and
the third interface is a USB interface transferring the data signal converted in a USB manner among the data signals.

9. The wireless USB type receiver of claim 8, wherein the application unit comprises first to third application mediums having different electric characteristics,
wherein the first to the third application mediums receiving the data from the first to third interfaces and displaying the received data,
wherein the first application medium is a mobile phone receiving the data signal from the SD interface and displaying the received data signal;
the second application medium is a computer receiving the data signal from the PCIe interface and displaying the received data signal;
the third application medium is a home appliance receiving the data signal from the USB interface and displaying the received data signal; and
a storage medium storing data transmitted from at least one of the mobile phone, the computer and the home appliance.

10. A wireless Universal Serial Bus (USB) type transceiver, comprising:
a signal transmitting unit transmitting data in a wireless USB manner; and
a signal receiving unit converting the data, which are comprised in a wireless USB type signal received from the signal transmitting unit, into data of a plurality of preset interface formats.

11. The wireless USB type transceiver of claim 10, wherein the signal transmitting unit comprises:
a signal processor restoring the data from a received signal;
a first interface converting the data from the signal processor into data of a preset interface manner; and
a first signal converter converting the data converted by the first interface into data signal of a wireless USB manner, and transmitting the converted data signal.

12. The wireless USB type transceiver of claim 11, wherein the first interface converts the data into data of a Secure Digital Input Output (SDIO) manner.

13. The wireless USB type transceiver of claim 12, wherein the signal processor comprises:
a first filter filtering a received Radio Frequency (RF) signal;
a first RF processor converting the RF signal filtered by the first filter into a baseband signal; and
a baseband processor restoring the data from the baseband signal.

14. The wireless USB type transceiver of claim 13, wherein first signal converter comprises:
a first data processor converting the data from the first interface into a wireless USB standard data packet;
a Radio Frequency (RF) converter converting the wireless USB standard data packet from the first data processor into an Ultra Wide Band (UWB) RF signal; and
a second filter filtering the UWB RF signal from the RF converter, and transmitting the filtered signal.

15. The wireless USB type transceiver of claim 14, wherein the signal receiving unit comprises:
a second signal converter restoring the data from the wireless USB standard data packet, and converting the restored data into data signals of a plurality of preset interface formats; and
an application unit processing the data signals of the preset interface formats converted by the second signal converter.

16. The wireless USB type transceiver of claim 15, wherein the second signal converter comprises:
a third filter filtering the UWB RF signal;
a second RF processor down converting the filtered UWB RF signal into a baseband signal;
a second data processor extracting the data from the baseband signal; and
a multiple format converter converting the data extracted by the second data processor into data of a plurality of preset interface formats.

17. The wireless USB type transceiver of claim 16, wherein the multiple format converter comprises:
a timing converter differently delaying respective periods of the data extracted by the second data processor according to the preset interface formats, and converting the data into a plurality of data signals having different periods;
a bit converter allowing the respective data signals from the timing converter to have different bits;
a voltage level converter allowing a plurality of data signals from the bit converter to have different voltage levels; and
a second interface transferring the data signals from the voltage level converter in respective corresponding interface manners.

18. The wireless USB type transceiver of claim 17, wherein the second interface comprises first to third interfaces transferring respective corresponding type data signals among the data signals by different interface manners,
wherein the first interface is a Secure Digital (SD) interface transferring the data signal converted in an SD manner among the data signals;
the second interface is a Peripheral Component Interconnect express (PCIe) interface transferring the data signal converted in a PCIe manner among the data signals; and
the third interface is a USB interface transferring the data signal converted in a USB manner among the data signals.

19. The wireless USB type transceiver of claim 18, wherein the application unit comprises first to third application mediums having different electric characteristics,
wherein the first to third application mediums receiving the data from the first to third interfaces and displaying the received data,
wherein the first application is a mobile phone receiving the data signal from the SD interface and displaying the received data signal;
the second application is a computer receiving the data signal from the PCIe interface and displaying the received data signal;
the third application is a home appliance receiving the data signal from the USB interface and displaying the received data signal; and
a storage medium storing data transmitted from at least one of the mobile phone, the computer and the home appliance.
